# FASCICULE DE BREVET EUROPEEN

(11) **EP 1 452 762 B1**
(45) Date de publication et mention de la délivrance du brevet: **03.05.2006**
(21) Numéro de dépôt: 04290539.8
(22) Date de dépôt: 27.02.2004
(51) Int. Cl.: F16D 25/08, F16D 48/04

(54) **Mécanisme de transformation d'un mouvement de rotation en translation, et dispositif d'embrayage l'utilisant.**
Mechanismus zur Umwandlung einer drehenden in einer geradlinigen Bewegung und diese verwendende Kupplung
Mechanism for transforming a rotational movement in a translation and clutch device using it

(30) Priorité: 28.02.2003 FR 0302480
(43) Date de publication de la demande: 01.09.2004
(73) Titulaire: Peugeot Citroen Automobiles, 78140 Velizy-Villacoublay (FR)
(72) Inventeur: Lelasseux, Xavier, 92150 Suresnes (FR)
(74) Mandataire: De Cuenca, Emmanuel Jaime

(56) Documents cités:
- DE-A- 19 547 081
- DE-A- 19 819 970
- FR-A- 2 812 048
- US-A- 4 643 290

## Description

La présente invention concerne un dispositif mécanique de transmission d'un mouvement de rotation en translation comprenant un premier élément formant moyeu de longueur axiale LM comprenant une surface périphérique extérieure munie d'un filet s'étendant substantiellement sur toute la longueur LM et un deuxième élément coaxial au premier élément formant couronne de longueur axiale LC inférieure à LM comprenant une surface périphérique intérieure également munie d'un filet s'étendant substantiellement sur toute la longueur LC, lesdits filets étant adaptés pour permettre à la couronne d'effectuer un mouvement hélicoïdal par rapport au moyeu.

Elle concerne plus particulièrement un dispositif de ce type utilisé en tant que partie d'une commande de débrayage d'un embrayage, tel qu'une embrayage à friction.

Actuellement, il est connu plusieurs types de dispositifs mécanique de transmission d'un mouvement de rotation en translation.

Tout d'abord, il est connu les systèmes de type vis/écrou pour tous types d'application avec un rendement d'effort relativement faible.

Il est connu également en tant que partie de dispositif de commande de débrayage d'un embrayage, en particulier celui utilisé dans les véhicules automobiles, des butées comprenant des système de vis à billes.

Le document FR 2 812 048 décrit par exemple une telle butée. Des butées de vis à billes présentent l'inconvénient majeur d'être coûteux. En effet, tout d'abord le nombre de billes nécessaires pour des applications automobiles doit être élevé.

En outre, il est nécessaire de prévoir une recirculation des billes utilisées à l'intérieur de la butée. Cette recirculation peut se faire par exemple par l'intermédiaire d'une gorge très volumineuse et de flasques de fermeture du chemin des billes.

Enfin, la fabrication des billes est elle-même coûteuse, ce qui augmente le prix de revient des billes.

Le but de l'invention est alors de proposer un dispositif de transmission d'un mouvement de rotation en translation qui soit peu coûteux et dont le rendement d'effort soit élevé.

Pour ce faire, l'invention a pour objet un dispositif mécanique de transmission d'un mouvement de rotation en translation comprenant un premier élément formant moyeu de longueur axiale LM comprenant une surface périphérique extérieure munie d'un filet s'étendant substantiellement sur toute la longueur LM et un deuxième élément coaxial au premier élément formant couronne de longueur axiale LC inférieure à LM comprenant une surface périphérique intérieure également munie d'un filet s'étendant substantiellement sur toute la longueur LC, au moins trois troisièmes éléments identiques étant adaptés pour permettre à la couronne d'effectuer un mouvement hélicoïdal par rapport au moyeu, caractérisé en ce que chacun des premier et deuxième éléments comprend une pluralité de rainures axiales s'étendant substantiellement sur toute la longueur respectivement LM,LC équidistantes les unes des autres et régulièrement réparties sur toute la périphérie respectivement extérieure et intérieure en formant des dents avec lesdits filets des premier et deuxième éléments, en ce que les trois troisièmes éléments forment satellites de longueur axiale LS inférieure à LC comprenant une surface périphérique extérieure munie d'un filet s'étendant substantiellement sur toute la longueur LS et comprenant chacun des empreintes équidistantes les unes des autres et régulièrement réparties à la périphérie extérieure et de forme au moins complémentaire aux dents desdits premier et deuxième éléments, et en ce qu'au moins un angle d'hélice des filets est non nul de sorte que les satellites sont auto-guidés sur toute la longueur LM en restant angulairement espacés avec les mêmes valeurs d'angle et impriment un mouvement de translation à la couronne par rapport au moyeu.

Par « au moins complémentaire », il faut comprendre ici et dans le cadre de l'invention, que le motif des empreintes présente unitairement un volume suffisant pour loger une dent du moyeu ou de la couronne, dans le cas où l'empreinte est en creux, et pour être loger entre les dents du moyeu ou de la couronne, dans le cas où l'empreinte est en saillie.

Un tel dispositif présente un rendement élevé supérieur à ceux des dispositifs actuellement existants.

Il permet également d'avoir une démultiplication en course et en effort importante.

En outre, il est très compact et peut être aisément implanté dans un espace restreint tel qu'à l'intérieur d'un carter d'embrayage.

Avantageusement, l'angle du filet du moyeu est inversé par rapport à celui du filet de la couronne.

Selon un mode de réalisation préféré, l'angle du filet de chacun des satellites est nul. Les satellites présentent alors en tant que motifs complémentaires des gorges.

Selon une variante, l'angle du filet respectivement du moyeu, de la couronne et des satellites est identique.

Avantageusement, les diamètres primitifs de la couronne, du moyeu et des satellites sont des multiples par valeur entière.

Selon le mode de réalisation préféré, le rapport de diamètre entre celui de la couronne et celui des satellites est égal à 5.

Selon le mode de réalisation préféré, le rapport de diamètre entre celui du moyeu et celui des satellites est égal à 3.

De préférence, le dispositif selon l'invention comprend des joints montés de part et d'autre de la couronne et adaptés pour rendre étanche complètement l'espace entre le moyeu et la couronne dans lequel sont montés les satellites.

L'invention concerne également un dispositif de commande de débrayage, tel qu'un embrayage à friction, comprenant un dispositif tel que décrit précédemment, selon lequel le moyeu comprend deux pattes de fixation au carter d'embrayage et une butée de débrayage de diamètre sensiblement égal à celui de la couronne est montée coaxialement au moyeu en bout de celui-ci.

Selon un mode de réalisation de ce dispositif de commande de débrayage, la couronne comprend à sa périphérie une ligne de denture adaptée pour être mise en rotation par une vis sans fin montée à l'extrémité d'un arbre de sortie d'un moteur électrique.

Selon une variante préférée, le moteur électrique est fixé au carter d'embrayage.

Selon un mode de réalisation préféré, la couronne comprend à sa périphérie une rainure hélicoïdale adaptée pour enrouler une extrémité d'un câble fixée à la couronne et dont l'autre extrémité est adaptée pour être enroulée dans une rainure hélicoïdale pratiquée en bout d'arbre de sortie du moteur électrique.

L'invention concerne également un embrayage à friction de type tiré ou poussé comprenant un dispositif de commande de débrayage tel que décrit ci-dessus.

L'invention concerne enfin un véhicule automobile comprenant un embrayage à friction tel que décrit ci-dessus.

D'autres caractéristiques et avantages de l'invention ressortiront mieux à la lecture de la description détaillée d'un exemple de réalisation de l'invention faite en référence aux figures 1 à 3 qui représentent respectivement :
- figure 1 : une vue en perspective de la partie extérieure d'un dispositif mécanique de transmission selon l'invention ;
- figure 2 : une vue en perspective d'un satellite utilisé dans le dispositif mécanique selon la figure 1 ;
- figure 3 :une vue en perspective d'un dispositif selon les figures 1 et 2 utilisé en tant que partie d'une commande d'embrayage d'un véhicule automobile ;
- figure 4 : une vue en perspective d'une couronne selon l'invention.

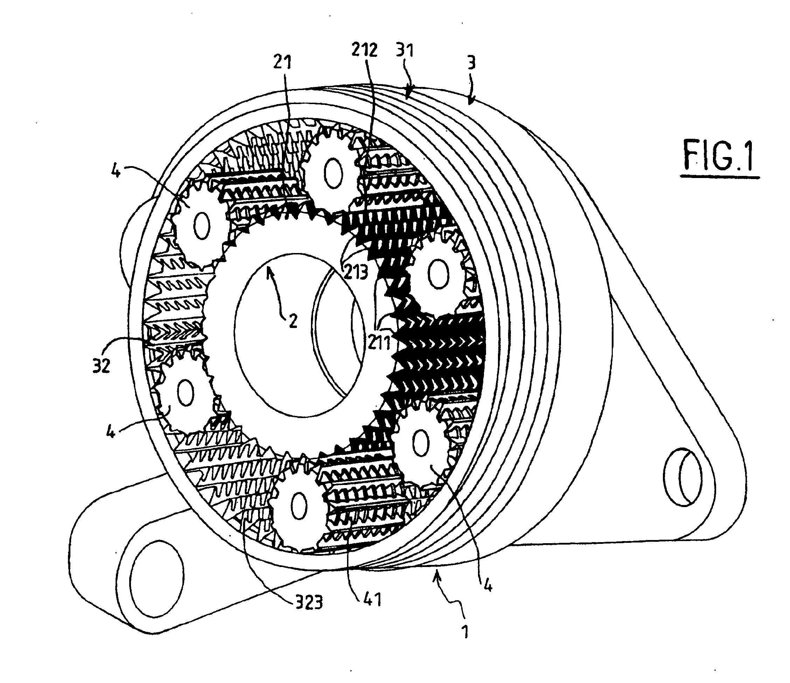

Sur la figure 1, on a représenté la partie extérieure d'un dispositif mécanique de transmission 1 selon l'invention. Il est constitué tout d'abord d'un moyeu sensiblement cylindrique 2 de longueur axiale LM sur lequel sont rapportées deux pattes de fixation 21 permettant par exemple de fixer le dispositif à un carter d'embrayage dans le cas où le dispositif est utilisé en tant que partie de commande de débrayage.

Une couronne cylindrique 3 de longueur axiale LC inférieure à LM et dont une portion extérieure 31 est dentée est disposée coaxialement à ce moyeu 2.

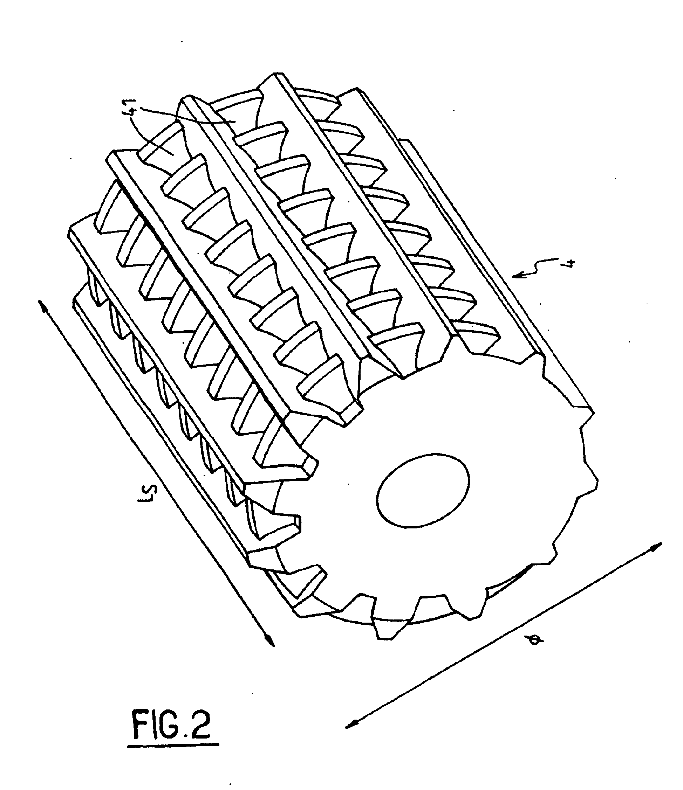

Comme on le voit également sur la figure 2, trois éléments identiques entre eux formant satellites 4 de longueur axiale LS inférieure à LC et de diamètre nominal sensiblement égal à l'espace annulaire e séparant la couronne 3 et le moyeu 2 sont disposés entre ceux-ci en étant montés libres.

Chacun de ces trois satellites 4 (figure 2) présente une pluralité d'empreintes 41 de profil pyramidal, régulièrement réparties sur sa périphérie extérieure et sur toute la longueur LS.

Ces trois satellites 4 sont angulairement espacés d'un même angle de 120° l'un de l'autre.

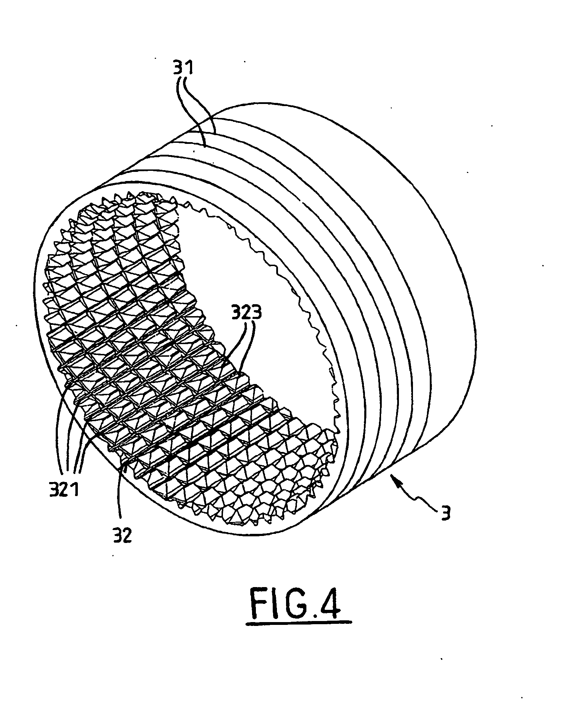

Comme on le voit également sur les figures 1 et 4, la couronne 3 présente dans sa partie intérieure 32 une pluralité de rainures longitudinales identiques 321 régulièrement espacées d'un pas de 6°. Elle présente également six filets hélicoïdaux identiques 322 d'un pas de 15mm. Le croisement de ces filets 322 avec chacune des rainures longitudinales 321 définit un ensemble de dents identiques 323. Chaque côté 323a, 323b de la dent 323 a un profil en développante de cercle obtenu après usinage. Le module de chaque dent est petit de l'ordre de 0,91. Le volume unitaire de chaque dent 323 est tel que la dent peut se loger dans chaque empreinte 41 de chacun des satellites 4.

Le moyeu 2 présente sur sa partie périphérique extérieure 21 une pluralité de rainures longitudinales 211 également régulièrement espacées d'un pas de 10 mm et qui s'étendent sur toute la longueur LM. Il présente également trois filets hélicoïdaux 212 d'un pas de 7.5mm. Le croisement de ces filets 212 avec chacune des rainures longitudinales 211 définit un ensemble de dents 213 identiques à celles 323 de la couronne 3 avec le même profil et le même volume unitaire.

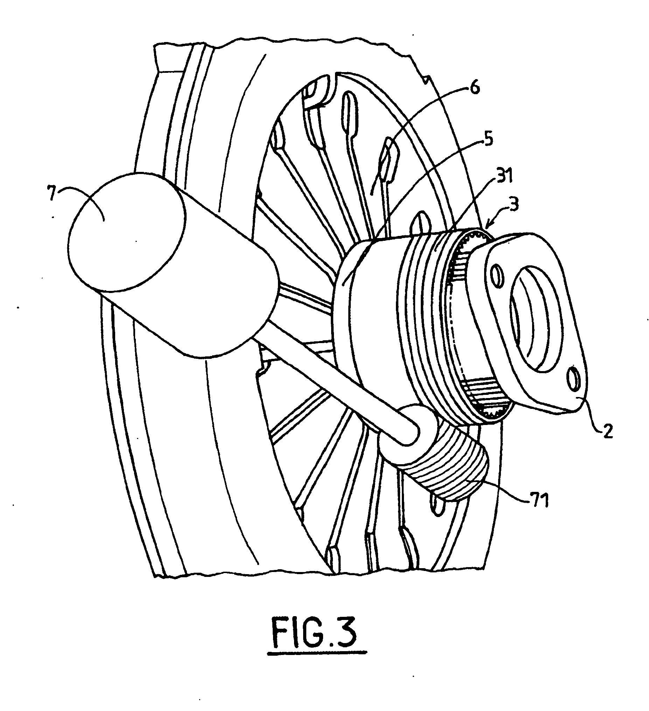

Sur la figure 3, on a représenté le dispositif qui vient d'être décrit selon les figures 1 et 2 utilisé en tant que partie de commande d'embrayage d'un embrayage de véhicule automobile.

Selon cette application, le moyeu 2 est fixé au carter d'embrayage non représenté et en bout de la couronne 3 est montée coaxiale une butée de débrayage 5 sous la forme d'une butée à billes. Cette butée de débrayage 5 est montée en contact avec un diaphragme d'embrayage 6.

Un moteur électrique 7 également fixé au carter d'embrayage vient engrener avec la partie extérieure dentée 31 de la couronne par l'intermédiaire d'une vis sans fin 71 montée en bout d'arbre de sortie du moteur 7.

Le fonctionnement du dispositif va maintenant être expliqué.

Lorsque le conducteur désire changer de rapport, il déclenche le moteur électrique 7 par une impulsion. La vis sans fin de ce dernier 71 vient engrener avec la partie extérieure dentée 31 de la couronne 3 comme un système vis sans fin connu en soi et donc déplacer la couronne 3 selon le sens f.

Les satellites 4 roulent alors sans glisser sur le moyeu 2 et à l'intérieur de la couronne 3 dans le sens de la rotation et sont guidés dans le sens axial par les filetages hélicoïdaux respectivement du moyeu 212 et de la couronne 322. Ils subissent pendant ces mouvements un léger frottement. Tout au long du déplacement de la couronne 3 le long du moyeu 2, les satellites restent régulièrement espacés entre eux d'un angle de 120° de l'un à l'autre.

Bien entendu, il va de soi que différentes améliorations peuvent être envisagées sans pour autant sortir du cadre de l'invention.

Ainsi, les filets réalisés respectivement sur le moyeu et à l'intérieur de la couronne peuvent être soit en tête de dent, soit en creux de dent, soit les deux.

De même, chaque filet peut être inversé par rapport à l'autre, ce qui permet d'avoir un engrènement des filets sans avoir de mouvement relatif de translation entre eux. Ceci permet d'avoir la translation seulement d'une pièce par rapport à l'autre, ce qui augmente la démultiplication (plus de tours pour une même rotation).

Comme variante, il peut être envisagé un autre type de commande de la couronne 3 depuis le moteur éléctrique 7.

Ainsi, il peut être envisagé d'implanter l'arbre de sortie du moteur 7 parallèlement à l'axe du moyeu 2 et de le fixer directement au carter d'embrayage, de créer une rainure hélicoîdale d'une part en bout d'arbre de sortie du moteur électrique et d'autre part autour de la couronne et de relier ces derniers entre eux au moyen d'un câble de traction enroulé autour et coulissant dans les rainures.

Cette variante est particulièrement avantageuse dans le cas où le dispositif selon l'invention est réversible. Dans ce cas là, un frein de l'arbre de sortie devra être prévu, le moteur électrique exerçant alors un seul couple moteur positif entre une position initiale dans laquelle la couronne est en retrait par rapport au bout moyeu et une position finale dans laquelle la couronne est déployée et fait saillie par rapport au bout du moyeu, et le frein bloquant la rotation de l'arbre de sortie du moteur et donc la couronne en position déployée.

Ce système de commande à couple moteur unique positif et frein est particulièrement intéressant à implanter dans les applications de boite de vitesses et embrayage pilotés de véhciule automobile. En effet, dans ces applications, et lors d'une panne du moteur électrique 7, l'embrayage doit rester dans son dernier état (ouvert ou fermé). Avec le frein, on comprend aisément qu'il est possible de garder un état fermé.

Quelles que soient les variantes envisagées, le dispositif ainsi constitué de satellites auto-centrés et guidés par les rainures permet de transformer en générant un mouvement de rotation sur la couronne de créer par réaction un mouvement de translation de celle-ci et avec une transmission de l'effort pratiquement sans frottement.

L'invention peut être appliquée à tous types d'ensembles mécaniques dans lesquels il est nécessaire de transformer un mouvement de rotation en translation avec une grande démultiplication et un rendement important.

A titre comparatif, le rendement du dispositif selon l'invention est bien meilleur que celui de tout systèmes de type vis/écrou ou vis à billes,

De même, le prix du dispositif selon l'invention est bien moindre par rapport à tout système de type vis à billes.

## Revendications

1. Dispositif mécanique de transmission (1) d'un mouvement de rotation en translation comprenant un premier élément formant moyeu (2) de longueur axiale LM comprenant une surface périphérique extérieure (21) munie d'un filet (212) s'étendant substantiellement sur toute la longueur LM et un deuxième élément coaxial au premier élément formant couronne (3) de longueur axiale LC inférieure à LM comprenant une surface périphérique intérieure (32) également munie d'un filet (322) s'étendant substantiellement sur toute la longueur LC, au moins trois troisièmes éléments (4) identiques étant adaptés pour permettre à la couronne d'effectuer un mouvement hélicoïdal par rapport au moyeu, **caractérisé en ce que** chacun des premier (2) et deuxième (3) éléments comprend une pluralité de rainures (221,321) axiales s'étendant substantiellement sur toute la longueur respectivement LM, LC équidistantes les unes des autres et régulièrement réparties sur toute la périphérie respectivement extérieure et intérieure en formant des dents (213,323) avec lesdits filets des premier et deuxième éléments, **en ce que** les trois troisièmes éléments forment satellites de longueur axiale LS inférieure à LC comprenant une surface périphérique extérieure munie d'un filet s'étendant substantiellement sur toute la longueur LS et comprenant chacun des empreintes (41) équidistantes les unes des autres et régulièrement réparties à la périphérie extérieure et de forme au moins complémentaire aux dents desdits premier et deuxième éléments, et **en ce qu'**au moins un angle d'hélice des filets est non nul de sorte que les satellites sont auto-guidés sur toute la longueur LM en restant angulairement espacés avec les mêmes valeurs d'angle θ et impriment un mouvement de translation à la couronne par rapport au moyeu.

2. Dispositif selon la revendication 1, **caractérisé en ce que,** l'angle du filet du moyeu est inversé par rapport à celui du filet de la couronne.

3. Dispositif selon la revendication 1 ou 2, **caractérisé en ce que** l'angle du filet de chacun des satellites est nul.

4. Dispositif selon l'une quelconque des revendications précédentes, **caractérisé en ce que** l'angle du filet respectivement du moyeu, de la couronne et des satellites est identique.

5. Dispositif selon l'une quelconque des revendications précédentes, **caractérisé en ce que** les diamètres primitifs de la couronne (3), du moyeu (2) et des satellites (4) sont des multiples par valeur entière.

6. Dispositif selon la revendication 5, **caractérisé en ce que** le rapport de diamètre entre celui de la couronne et celui des satellites est égal à 5.

7. Dispositif selon la revendication 5 ou 6, **caractérisé en ce que** le rapport de diamètre entre celui du moyeu et celui des satellites est égal à 3.

8. Dispositif selon l'une quelconque des revendications précédentes, **caractérisé en ce qu'**il comprend des joints montés de part et d'autre de la couronne et adaptés pour rendre étanche complètement l'espace entre le moyeu et la couronne dans lequel sont montés les satellites.

9. Dispositif de commande de débrayage, tel qu'un embrayage à friction, comprenant un dispositif selon l'une quelconque des revendications précédentes, **caractérisé en ce que** le moyeu comprend deux pattes de fixation au carter d'embrayage et **en ce qu'**une butée de débrayage (5) de diamètre sensiblement égal à celui de la couronne est montée coaxialement au moyeu en bout de celui-ci.

10. Dispositif selon la revendication 9, **caractérisé en ce que** la couronne (3) comprend à sa périphérie une ligne de denture adaptée pour être mise en rotation par une vis sans fin montée à l'extrémité d'un arbre de sortie (71) d'un moteur électrique(7).

11. Dispositif selon la revendication 10, **caractérisé en ce que** le moteur électrique est fixé au carter d'embrayage.

12. Dispositif selon la revendication 9 en combinaison avec la revendication 11, **caractérisé en ce que** la couronne comprend à sa périphérie une rainure hélicoïdale adaptée pour enrouler une extrémité d'un câble fixée à la couronne et dont l'autre extrémité est adaptée pour être enroulée dans une rainure hélicoïdale pratiquée en bout d'arbre de sortie du moteur électrique.

13. Embrayage à friction de type tiré ou poussé comprenant un dispositif de commande de débrayage selon l'une quelconque des revendications 9 à 12.

14. Véhicule automobile comprenant un embrayage à friction selon la revendication 13.

## Patentansprüche

1. Mechanische Vorrichtung (1) zur Übertragung einer Drehbewegung in eine Translationsbewegung, mit einem ersten Element, das eine Nabe (2) von axialer Länge LM mit einer peripherischen Außenfläche (21) bildet, die mit einem Gewinde (212) versehen ist, das sich im Wesentlichen über die gesamte Länge LM erstreckt, mit einem zweiten, zum ersten Element koaxialen Element, das einen Kranz (3) von axialer Länge LC bildet, die kleiner ist als LM, und eine peripherische Innenfläche (32) aufweist, die ebenfalls mit einem Gewinde (322) versehen ist, das sich im Wesentlichen über die gesamte Länge LC erstreckt, und mit mindestens drei gleichen dritten Elementen (4), die eine Schraubbewegung des Kranzes gegenüber der Nabe ermöglichen, **dadurch gekennzeichnet, dass** jedes erste Element (2) und zweite Element (3) mehrere axiale Nuten (221, 321) aufweisen, die sich im Wesentlichen über die gesamte Länge LM beziehungsweise LC im gleichen Abstand voneinander und gleichmäßig über die gesamte äußere beziehungsweise innere Peripherie verteilt erstrecken und dabei Zähne (213, 323) mit den Gewinden der ersten und zweiten Elemente bilden, und **dadurch**, dass die drei dritten Elemente Planetenräder von axialer Länge LS bilden, die kleiner ist als LC, und eine peripherische Außenfläche mit einem Gewinde umfassen, das sich im Wesentlichen über die gesamte Länge LS erstreckt, und jeweils im gleichen Abstand voneinander und gleichmäßig auf der äußeren Peripherie verteilt Prägungen (41) aufweisen, deren Form mindestens zu den Zähnen der ersten und zweiten Elemente komplementär ist, und **dadurch**, dass mindestens ein Steigungswinkel der Gewinde nicht null ist, sodass die Planetenräder über die gesamte Länge LM selbstgesteuert sind, wobei sie mit den gleichen Winkelwerten θ winkelmäßig beabstandet bleiben, und den Kranz gegenüber der Nabe eine Translationsbewegung ausführen lassen.

2. Vorrichtung nach Anspruch 1, **dadurch gekennzeichnet, dass** der Winkel des Gewindes der Nabe umgekehrt gegenüber dem des Gewindes des Kranzes ist.

3. Vorrichtung nach Anspruch 1 oder 2, **dadurch gekennzeichnet, dass** der Winkel des Gewindes jedes der Planetenräder null ist.

4. Vorrichtung nach einem der vorhergehenden Ansprüche, **dadurch gekennzeichnet, dass** der Winkel des Gewindes der Nabe, des Kranzes beziehungsweise der Planetenräder gleich ist.

5. Vorrichtung nach einem der vorhergehenden Ansprüche, **dadurch gekennzeichnet, dass** die wirksamen Durchmesser des Kranzes (3), der Nabe (2) und der Planetenräder (4) Vielfache von ganzen Werten sind.

6. Vorrichtung nach Anspruch 5, **dadurch gekennzeichnet, dass** das Verhältnis der Durchmesser von Kranz und Planetenrädern 5 entspricht.

7. Vorrichtung nach Anspruch 5 oder 6, **dadurch gekennzeichnet, dass** das Verhältnis der Durchmesser von Nabe und Planetenrädern 3 entspricht.

8. Vorrichtung nach einem der vorhergehenden Ansprüche, **dadurch gekennzeichnet, dass** sie Dichtungen umfasst, die auf beiden Seiten des Kranzes montiert sind und den Raum zwischen Nabe und Kranz, in dem die Planetenräder montiert sind, völlig abdichten.

9. Vorrichtung zum Steuern des Ausrückens, beispielsweise eine Reibungskupplung, mit einer Vorrichtung nach einem der vorhergehenden Ansprüche, **dadurch gekennzeichnet, dass** die Nabe zwei Lappen zur Befestigung am Kupplungsgehäuse aufweist und **dadurch**, dass ein Kupplungsausrücklager (5), dessen Durchmesser im Wesentlichen dem Durchmesser des Kranzes entspricht, koaxial zur Nabe am Ende von dieser montiert ist.

10. Vorrichtung nach Anspruch 9, **dadurch gekennzeichnet, dass** der Kranz (3) an seiner Peripherie eine Zahnungsreihe aufweist, die von einer am Ende einer Ausgangswelle (71) eines Elektromotors (7) montierten Schraube ohne Ende in Drehung versetzt werden kann.

11. Vorrichtung nach Anspruch 10, **dadurch gekennzeichnet, dass** der Elektromotor am Kupplungsgehäuse befestigt ist.

12. Vorrichtung nach Anspruch 9 in Kombination mit Anspruch 11, **dadurch gekennzeichnet, dass** der Kranz an seiner Peripherie eine Spiralnut aufweist, die ein Ende eines am Kranz befestigten Kabels umgeben kann, dessen anderes Ende von einer Spiralnut umgeben sein kann, die am Ende der Ausgangswelle des Elektromotors vorgesehen ist.

13. Gezogene oder gedrückte Reibungskupplung mit einer Vorrichtung zur Ausrücksteuerung nach einem der Ansprüche 9 bis 12.

14. Kraftfahrzeug mit einer Reibungskupplung nach Anspruch 13.

## Claims

1. Mechanical device (1) for transmitting a rotational movement in translation comprising a first element forming a hub (2) with an axial length LM comprising an outer peripheral surface (21) provided with a thread (212) extending over substantially the entire length LM and a second element, coaxial with the first element, forming a crown (3) with an axial length LC less than LM comprising an inner peripheral surface (32) also provided with a thread (322) extending over substantially the entire length LC, at least three identical third elements (4) being suitable for allowing the crown to perform a helical movement with respect to the hub, **characterised in that** each of the first (2) and second (3) elements comprises a plurality of axial grooves (221, 321) extending over substantially the entire length LM, LC respectively equidistant from one another and distributed regularly over the whole periphery, outer and inner respectively, while forming teeth (213, 323) with said threads of the first and second elements, **in that** the three third elements form satellites with an axial length LS less than LC comprising an outer peripheral surface provided with a thread extending over substantially the entire length LS and each comprising impressions (41) equidistant from one another and distributed regularly over the outer periphery and at least complementary in shape to the teeth of said first and second elements, and **in that** at least one helix angle of the threads is non-zero so that the satellites are self-guided over the entire length LM while remaining angularly spaced with the same values for angle θ and impart a translational movement to the crown with respect to the hub.

2. Device according to Claim 1, **characterised in that** the angle of the thread of the hub is inverted with respect to that of the thread of the crown.

3. Device according to Claim 1 or 2, **characterised in that** the angle of the thread of each of the satellites is zero.

4. Device according to any one of the preceding claims, **characterised in that** the angle of the thread of the hub, crown and satellites respectively is identical.

5. Device according to any one of the preceding claims, **characterised in that** the pitch diameters of the crown (3), the hub (2) and the satellites (4) are integer multiples.

6. Device according to Claim 5, **characterised in that** the ratio of the diameter of the crown to that of the satellites is equal to 5.

7. Device according to Claim 5 or 6, **characterised in that** the ratio of the diameter of the hub to that of the satellites is equal to 3.

8. Device according to any one of the preceding claims, **characterised in that** it comprises gaskets mounted on either side of the crown and suitable for completely sealing the space between the hub and the crown in which the satellites are mounted.

9. Disengagement control device, such as a friction clutch, comprising a device according to any one of the preceding claims, **characterised in that** the hub comprises two feet for fixing to the clutch housing and **in that** a throw-out bearing (5), with a diameter substantially equal to that of the crown, is mounted coaxially to the hub at the end of said hub.

10. Device according to Claim 9, **characterised in that** the crown (3) comprises at its periphery a line of toothing suitable for being put into rotation by an endless screw mounted at the end of an output shaft (71) of an electric motor (7).

11. Device according to Claim 10, **characterised in that** the electric motor is fixed to the clutch housing.

12. Device according to Claim 9 in combination with Claim 11, **characterised in that** the crown comprises at its periphery a helical groove suitable for winding up one end of a cable fixed to the crown, and the other end of which is suitable for being wound up in a helical groove made at the end of the output shaft of the electric motor.

13. Friction clutch of the pull- or push-type comprising a disengagement control device according to any one of Claims 9 to 12.

14. Motor vehicle comprising a friction clutch according to Claim 13.
